# EUROPEAN PATENT APPLICATION

(11) **EP 3 088 460 A1**
(43) Date of publication of application: **02.11.2016**
(21) Application number: 14873637.4
(22) Date of filing: 13.11.2014
(51) Int. Cl.: C08L 27/12, C08J 7/00, C08K 5/18, C08K 5/37, C09K 3/10, F16J 15/10

(54) **PERFLUOROELASTOMER COMPOSITION, SEALING MATERIAL AND METHOD FOR PRODUCING SAME**

(30) Priority: 27.12.2013 JP 2013271345
(71) Applicant: Nippon Valqua Industries, Ltd., Tokyo 141-6024 (JP)
(72) Inventor: OSUMI, Naoki, Gojo-shi Nara 637-0014 (JP); TODA, Sayaka, Gojo-shi Nara 637-0014 (JP)
(74) Representative: Vossius & Partner Patentanwälte Rechtsanwälte mbB
(86) International application number: PCT/JP2014/080026
(87) International publication number: WO 2015/098337

(57) **Abstract**

Provided are: a perfluoroelastomer composition which contains 100 parts by weight of a perfluoroelastomer containing a constituent unit derived from tetrafluoroethylene, a constituent unit derived from a perfluoro(alkyl vinyl ether) or a perfluoro(alkoxyalkyl vinyl ether) and a constituent unit derived from a nitrile group-containing perfluorovinyl ether, greater than or equal to 1 part by weight and less than 25 parts by weight of a fluororesin and a specific crosslinking agent; a sealing material which is formed of a crosslinked product of this perfluoroelastomer composition; and a method for producing this sealing material.

## Description

### TITLE OF INVENTION

Perfluoroelastomer Composition, Sealing Material, and Method for Producing Same

### TECHNICAL FIELD

The present invention relates to a perfluoroelastomer composition, a sealing material including the perfluoroelastomer composition, and a method for producing the sealing material.

### BACKGROUND ART

As sealing materials (e.g., a gasket and a packing) used in various applications, sealing materials including fluorine rubbers are known. In a plasma etching device or a plasma CVD device constituting a semiconductor manufacturing device, a sealing material including a fluorine rubber, particularly a perfluoroelastomer having excellent heat resistance and plasma resistance (i.e., resistance to decomposition with plasma), is used as a sealing material for maintaining a process chamber for treating a wafer therein in a vacuum state. For example, a sealing material to be used in a gate section that partitions between a chamber and a delivery section in a semiconductor manufacturing device is also required to have proper mechanical strength, because the compression and release of pressure are repeated in the gate section.

The mechanical strength of a sealing material including a fluorine rubber can be improved by adding an inorganic filler. However, when the sealing material containing the inorganic filler is used in a semiconductor manufacturing device as mentioned above, even if the perfluoroelastomer having excellent plasma resistance is used, the perfluoroelastomer component in the sealing material is often etched with plasma under a severe plasma environment. In this case, a problem may be caused that the inorganic filler contained in the fluoroelastomer is scattered in the chamber and therefore the contamination of the chamber or the defect of a semiconductor product is likely to occur.

Japanese Patent No. 2937302 (PTD 1) discloses a sealing material composition for plasma etching devices, which contains a perfluoroelastomer and a polytetrafluoroethylene resin powder and can have an eluted metal content of less than or equal to a predetermined value after vulcanization.

### CITATION LIST

### PATENT DOCUMENT

PTD 1: Japanese Patent No. 2937302

### SUMMARY OF INVENTION

### TECHNICAL PROBLEM

An object of the present invention is to provide a perfluoroelastomer composition that enables the production of a sealing material having excellent mechanical strength (hardness and a modulus) while maintaining the heat resistance (compressive permanent strain properties) thereof at a good level without requiring the addition of an inorganic filler that can cause the above-mentioned problem; a sealing material including the perfluoroelastomer composition; and a method for producing the sealing material.

### SOLUTIONS TO PROBLEMS

The present invention provides a perfluoroelastomer composition, a sealing material and a method for producing the sealing material as mentioned below.
[1] A perfluoroelastomer composition comprising:
   100 parts by weight of a perfluoroelastomer containing a constituent unit derived from tetrafluoroethylene, a constituent unit derived from a perfluoro(alkyl vinyl ether) or a perfluoro(alkoxyalkyl vinyl ether) and a constituent unit derived from a nitrile group-containing perfluorovinyl ether;
      greater than or equal to 1 part by weight and less than 25 parts by weight of a fluororesin; and
      at least one crosslinking agent selected from the group consisting of a bis(aminophenol) compound represented by general formula (1) below: 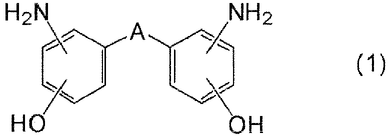 and a bis(aminothiophenol) compound represented by general formula (2) below: 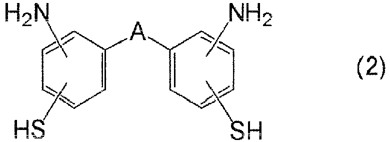 and a tetraamine compound represented by general formula (3) below: 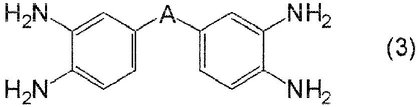 [in formulae (1) to (3), A represents SO₂, O, C=O, an alkylene group having 1 to 6 carbon atoms, a perfluoroalkylene group having 1 to 10 carbon atoms, or a carbon-carbon bond directly bonding the two benzene rings to each other; and in formulae (1) and (2), a NH₂ group and an OH group or an SH group both located on the same benzene ring are adjacent to each other and the NH₂ group and the OH group or the SH group are in the meta- or para-position with respect to the group A].
[2] The perfluoroelastomer composition according to [I], wherein a content of the crosslinking agent is 0.05 to 5 parts by weight relative to 100 parts by weight of the perfluoroelastomer.
[3] The perfluoroelastomer composition according to [1] or [2], wherein a content of the fluororesin is 3 to 20 parts by weight relative to 100 parts by weight of the perfluoroelastomer.
[4] The perfluoroelastomer composition according to any of [1] to [3], wherein the perfluoroelastomer composition contains no inorganic filler.
[5] A sealing material comprising a crosslinked product of the perfluoroelastomer composition according to any of [1] to [4].
[6] The sealing material according to [5], wherein the sealing material is used for a semiconductor manufacturing device.
[7] A method for producing a sealing material, the method comprising a step of crosslinking and molding the perfluoroelastomer composition according to any of [1] to [4].
[8] The production method according to [7], wherein the step of crosslinking and molding includes a step of crosslinking with an ionizing radiation.

### ADVANTAGEOUS EFFECTS OF INVENTION

According to the present invention, it is possible to provide a perfluoroelastomer composition that can have good heat resistance (compressive permanent strain properties) and excellent mechanical strength after being cured even when no inorganic filler is contained. When the perfluoroelastomer composition contains no inorganic filler, it is possible to prevent the contamination of a chamber or the defect of a semiconductor product caused by the scattering of the inorganic filler (i.e., generation of particles). The perfluoroelastomer composition according to the present invention can be used suitably as a sealing material, particularly a sealing material for semiconductor manufacturing devices.

### DESCRIPTION OF EMBODIMENTS

### <Perfluoroelastomer composition>

### [a] Perfluoroelastomer

The perfluoroelastomer to be used in the present invention is a three-component copolymer containing a constituent unit I derived from tetrafluoroethylene, a constituent unit II derived from a perfluoro(alkyl vinyl ether) or a perfluoro(alkoxyalkyl vinyl ether) and a constituent unit III derived from a nitrile group-containing perfluorovinyl ether III. A perfluoroelastomer composition containing the perfluoroelastomer as the main component enables the provision of a crosslinked molded product (such as a sealing material) having excellent plasma resistance.

The perfluoro(alkyl vinyl ether) can be one that has an alkyl group having 1 to 5 carbon atoms, and is, for example, perfluoro(methyl vinyl ether), perfluoro(ethyl vinyl ether) or perfluoro(propyl vinyl ether), preferably perfluoro(methyl vinyl ether).

In the perfluoro(alkoxyalkyl vinyl ether), a group bonding to a vinyl ether group (CF₂=CFO-) can have 3 to 11 carbon atoms. Examples of the group may include CF₂=CFOCF₂CF(CF₃)OCₙF₂ₙ₊₁, CF₂=CFO(CF₂)₃OCₙF₂ₙ₊₁, CF₂=CFOCF₂CF(CF₃)O(CF₂O)ₘCₙF₂ₙ₊₁ and CF₂=CFO(CF₂)₂OCₙF₂ₙ₊₁. In the formulae, n represents, for example, 1 to 5 and m represents, for example, 1 to 3.

The nitrile group-containing perfluorovinyl ether is a crosslinking site monomer. Examples of the nitrile group-containing perfluorovinyl ether may include CF₂=CFO(CF₂)ₙOCF(CF₃)CN (wherein n represents, for example, 2 to 4), CF₂-CFO(CF₂)ₙCN (wherein n represents, for example, 2 to 12), CF₂=CFO[CF₂CF(CF₃)O]ₘ(CF₂)ₙCN (n represents, for example, 2 and m represents, for example, 1 to 5), CF₂=CFO[CF₂CF(CF₃)O]ₘ(CF₂)ₙCN (wherein n represents, for example, 1 to 4 and m represents, for example, 1 to 2) and CF₂=CFO[CF₂CF(CF₃)O]ₙCF₂CF(CF₃)CN (wherein n represents, for example, 0 to 4).

The content ratio among the constituent units, i.e., a (constituent unit I)/(constituent unit II)/(constituent unit III) ratio, in the perfluoroelastomer is generally (50 to 74.8%)/(25 to 49.8%)/(0.2 to 5%), preferably (60 to 74.8%)/(25 to 39.5%)/(0.5 to 2%), by mole. The perfluoroelastomer composition according to the present invention can contain at least two perfluoroelastomers having different (constituent unit I)/(constituent unit II)/(constituent unit III) ratios from each other.

As the perfluoroelastomer, a commercially available product can be used, and an example of which includes "PFE 131 TZ" (trade name; manufactured by Dyneon).

### [b] Fluororesin

The fluororesin is a resin having a fluorine atom in the molecule thereof. Examples of the fluororesin may include polytetrafluoroethylene (PTFE), a tetrafluoroethylene-perfluoroalkyl vinyl ether copolymer (PFA), a tetrafluoroethylene-hexafluoropropylene copolymer (FEP), a tetrafluoroethylene-ethylene copolymer (ETFE), polychlorotrifluoroethylene (PCTFE), a chlorotrifluoroethylene-ethylene copolymer (ECTFE), polyvinylidene fluoride (PVDF), polyvinyl fluoride (PVF), a vinylidene fluoride-hexafluoropropylene copolymer (a VDF-HFP copolymer) and a vinylidene fluoride-hexafluoropropylene-tetrafluoroethylene copolymer (a VDF-HFP-TFE copolymer). As the fluororesin, only one fluororesin may be used or a combination of two or more fluororesins may be used.

Among the above-mentioned compounds, PFA and PTFE that have high melting points are preferably used from the viewpoint of the prevention of the melting of the resin that can cause the deterioration in properties, including a compressive permanent strain, during the use of the molded product at a high temperature.

The fluororesin may be one having a functional group. The functional group can be introduced into the fluororesin by, for example, copolymerizing a monomer having the functional group. A matter that a crosslinking site monomer is copolymerized as the monomer having a functional group is advantageous from the viewpoint of the further improvement in the mechanical strength or the like of a crosslinked molded product of the perfluoroelastomer composition. The crosslinking site monomer may be a nitrile group-containing monomer, as in the case in the above-mentioned nitrile group-containing perfluorovinyl ether. An example of the fluororesin having a functional group may include a nitrile group-containing polytetrafluoroethylene that is disclosed in Japanese Patent Laying-open No. 2013-177631.

Alternatively, the fluororesin may be a modified fluororesin, such as "TFM-modified PTFE" (a product manufactured by Dyneon).

The content of the fluororesin (when at least two fluororesins are used, the total content of the fluororesins) in the perfluoroelastomer composition is greater than or equal to 1 part by weight and less than 25 parts by weight, preferably 3 to 24 parts by weight, more preferably 3 to 20 parts by weight, relative to 100 parts by weight of the perfluoroelastomer. A matter that the content is greater than or equal to 1 part by weight is advantageous from the viewpoint of the improvement in the mechanical strength of a crosslinked molded product (e.g., a sealing material) produced from the composition. Furthermore, when the content is less than 25 parts by weight, both of good mechanical strength and good heat resistance (compressive permanent strain properties) can be achieved. If the content of the fluororesin is greater than or equal to 25 parts by weight, the content of the perfluoroelastomer that exerts elasticity is decreased in accordance with the increase in the content of the fluororesin and, as the result, the compressive permanent strain properties are deteriorated.

The fluororesin content of greater than or equal to I part by weight and less than 25 parts by weight is a relatively small amount. However, according to the present invention, excellent mechanical strength can be achieved using a crosslinking system based on the below-mentioned specific crosslinking agent.

### [c] Crosslinking agent

The perfluoroelastomer composition according to the present invention contains at least one crosslinking agent selected from the group consisting of a bis(aminophenol) compound represented by general formula (1) above, a bis(aminothiophenol) compound represented by general formula (2) above and a tetraamine compound represented by general formula (3) above. When the perfluoroelastomer having a nitrile group as a crosslinking site is crosslinked with a crosslinking system based on the crosslinking agent, it is possible to impart excellent mechanical strength to a crosslinked molded product, in spite of a fact that the content of the fluororesin is relatively small.

When the fluororesin has a crosslinking site such as a nitrile group, the crosslinking of the fluororesin with the above-mentioned crosslinking agent also proceeds and therefore this crosslinking can contribute to the further improvement in the mechanical strength.

Specific examples of the preferably used crosslinking agent include 2,2-bis(3-amino-4-hydroxyphenyl)hexafluoropropane (BOAP); 4,4'-sulfonylbis(2-aminophenol)[bis(3-amino-4-hydroxyphenyl)sulfone], 3,3'-diaminobenzidine and 3,3',4,4'-tetraaminobenzophenone. Among these compounds, BOAP is preferably used.

The content of the crosslinking agent (when at least two crosslinking agents are used, the total content of the crosslinking agents) in the perfluoroelastomer composition is preferably an amount that is enough to cause the crosslinking at all of the crosslinking sites in the perfluoroelastomer (in some cases, the crosslinking sites in the fluororesin). It is typical that the content is preferably 0.05 to 5 parts by weight, more preferably 0.1 to 3 parts by weight, still more preferably 0.1 to 1.5 parts by weight, relative to 100 parts by weight of the perfluoroelastomer.

The perfluoroelastomer composition may also contain other crosslinking agent than the crosslinking agents respectively represented by general formula (1) to (3) above or a curing catalyst, such as a tin compound, a phosphorous compound and a nitrogen compound that are crosslinking catalysts for a triazine crosslinking system. The content of the above-mentioned other crosslinking agent or crosslinking catalyst is preferably less than or equal to 50% by weight, more preferably less than or equal to 20% by weight, still more preferably less than or equal to 10% by weight, particularly preferably 0% by weight, relative to 100% by weight of the crosslinking agent represented by formula (1) to (3) above, from the viewpoint of the mechanical strength of a crosslinked molded product.

### [d] Other compounding agents

For the purpose of improving processability and controlling physical properties, the perfluoroelastomer composition according to the present invention can optionally contain an additive such as an anti-aging agent, an antioxidant agent, a vulcanization accelerator, a processing aid (e.g., stearic acid), a stabilizer, a tackifier, a silane coupling agent, a plasticizer, a flame retardant agent, a mold release agent, a wax and a lubricant. Only one of the additives may be used, or a combination of two or more of the additives may be used.

When it is intended to use the sealing material in a semiconductor manufacturing device, for the purpose of preventing the contamination during the production process or the reduction in semiconductor production efficiency caused by the evaporation, elution or deposition of the additive, it is preferred that the amount of the additive is as small as possible (e.g., less than or equal to 10 parts by weight, preferably less than or equal to 5 parts by weight, more preferably less than or equal to 2 parts by weight, still more preferably less than or equal to 1 part by weight, relative to 100 parts by weight of the perfluoroelastomer), and it is desirable to add no additive.

The perfluoroelastomer composition according to the present invention can optionally contain a filler such as carbon black, silica, alumina, zinc oxide, titanium oxide, clay, talc, diatomaceous earth, barium sulfate, calcium carbonate, magnesium carbonate, calcium oxide, mica, graphite, aluminum hydroxide, aluminum silicate, hydrotalcite, a metal powder, a glass powder or a ceramic powder.

Among these fillers, particularly an inorganic filler can cause the formation of particles, as mentioned above. Therefore, when it is intended to use the sealing material in a semiconductor manufacturing device, it is preferred that the amount of an inorganic filler is as small as possible (e.g., less than or equal to 10 parts by weight, preferably less than or equal to 5 parts by weight, more preferably less than or equal to 2 parts by weight, still more preferably less than or equal to 1 part by weight, relative to 100 parts by weight of the perfluoroelastomer), and it is desirable to add no inorganic filler. The term "an inorganic filler" refers to a filler containing a metal element (e.g., Ba, Ti, Zn, Al, Mg, Ca, Si).

### [e] Preparation of perfluoroelastomer composition

The perfluoroelastomer composition according to the present invention can be prepared by kneading the perfluoroelastomer, the fluororesin, the crosslinking agent and other optional compounding agents homogeneously. As a kneading machine, any conventionally known one, such as a mixing roll (e.g., an open roll) and a mixer (e.g., a kneader or a Bumbary mixer), can be used. It is possible to knead these compounding agents in one step. Alternatively, it is also possible to knead these compounding agents in several steps in such a manner that firstly some of the compounding agents are kneaded and subsequently the remainders of the compounding agents are kneaded.

As for the kneading of the perfluoroelastomer with the fluororesin, the following methods can be employed: (1) a method in which a powder of the perfluoroelastomer is kneaded with a powder of the fluororesin with a mixing roll; (2) a method in which a powder or pellet of the perfluoroelastomer is melt-kneaded with a powder or pellet of the fluororesin with a mixer; or (3) a method in which the fluororesin is added during the step of preparing the perfluoroelastomer.

An example of the method (3) may include a method in which an aqueous dispersion of the perfluoroelastomer and an aqueous dispersion of the fluororesin both prepared by an emulsion polymerization method are mixed together and then the resultant mixture is co-coagulated to produce a mixture of the perfluoroelastomer and the fluororesin.

### <Sealing material>

A crosslinked molded product such as a sealing material can be produced by the crosslinking and molding (vulcanization molding) of the perfluoroelastomer composition. The crosslinking and molding can be carried out by pre-molding the perfluoroelastomer composition if necessary and then press-molding the preformed product using a mold The molding temperature is, for example, about 150 to 220°C. The molding may be carried out by feed press molding, injection molding, extrusion molding or the like. If necessary, secondary crosslinking may be carried out at a temperature of about 150 to 280°C.

When the perfluoroelastomer composition contains a fluororesin having a relatively low melting point, such as ETFE, PVDF, PCTFE, ECTFE, a vinylidene fluoride-hexafluoropropylene copolymer (a VDF-HFP copolymer) and a vinylidene fluoride-hexafluoropropylene-tetrafluoroethylene copolymer (a VDF-HFP-TFE copolymer), it is preferred to involve the step of carrying out crosslinking and molding (e.g., press molding) as mentioned above and subsequently irradiating the molded product with an ionizing radiation to cause the crosslinking in the molded product, for the purpose of enabling the sealing material to be used at a temperature equal to or higher than the melting temperature of the fluororesin. In this manner, it is possible to maintain the compressive permanent strain properties of the sealing material at a practically available level. As the ionizing radiation, an electron beam or γ-ray can be used preferably.

The sealing material can be a packing, a gasket or the like. The shape of the sealing material is selected appropriately depending on the intended use thereof. A typical example of the shape is an O-ring having an O-shaped cross section. The sealing material according to the present invention can have good heat resistance (compressive permanent strain properties) and mechanical strength while containing no inorganic filler. Therefore, the sealing material can be used particularly suitably as a sealing material for semiconductor manufacturing devices.

### EXAMPLES

Hereinbelow, the present invention will be described in more detail by way of Examples and Comparative Examples. However, the invention is not intended to be limited thereto.

### <Examples 1 to 6, Comparative Examples 1 to 9>

A perfluoroelastomer composition was prepared and then a sealing material was produced in accordance with the below-mentioned procedure. First, predetermined amounts of compounding agents were kneaded with an open roll, in which the compounding ratios are shown in Table I (wherein the unit for each of the compounding amounts is part(s) by weight). Subsequently, the resultant perfluoroelastomer composition was press-molded under the conditions of 180°C for 25 minutes (in Comparative Examples 3 to 8, 170°C for 20 minutes), and was then subjected to secondary crosslinking under the conditions of 280°C for 6 hours (in Comparative Examples 3 to 5 and 7 to 8, 300°C for 5 hours; in Comparative Example 6, 200°C for 4 hours), thereby producing a sealing material (an O-ring).

**[Table 1]**

| | | | Examples | | | | | | Comparative Examples | | | | | | | | |
|---|---|---|---|---|---|---|---|---|---|---|---|---|---|---|---|---|---|
| | | | 1 | 2 | 3 | 4 | 5 | 6 | 1 | 2 | 3 | 4 | 5 | 6 | 7 | 8 | 9 |
| Perfluoroelastomers | FFKM 1 | | 87.6 | 74.5 | 55.6 | 20.4 | 100 | 100 | 100 | | 74.5 | 55.6 | 20.4 | | 100 | 100 | 100 |
| | FFKM 2 (Elastomer component) | | 12.4 | 25.5 | 44.4 | 79.6 | | | | 100 | 25.5 | 44.4 | 79.6 | | | | |
| | FFKM 3 | | | | | | | | | | | | | 100 | | | |
| Fluororesins | Fluororesin 1 (derived from FFKM 2) | | 3.1 | 6.4 | 11.1 | 19.9 | | | | 25.0 | 6.4 | 11.1 | 19.9 | | | | |
| | Fluororesin 2 | | | | | | 3.0 | 20.0 | | | | | | 11.0 | 3.0 | 20.0 | 25.0 |
| Crosslinking agents or crosslinking catalysts | BOAP | | 1.55 | 1.60G | 1.67 | 1.80 | 1.50 | 1.50 | 1.50 | 1.89 | | | | | | | 1.50 |
| | triazine-type crosslinking catalyst | | | | | | | | | | 1.38 | 1.44 | 1.56 | | 1.30 | 1.30 | |
| | TAIC | | | | | | | | | | | | | 3.00 | | | |
| | Perhexa 25B | | | | | | | | | | | | | 1.00 | | | |
| Hardness | | shoreA | 68 | 70 | 74 | 80 | 68 | 81 | 64 | 85 | 61 | 64 | 68 | 64 | 61 | 74 | 86 |
| Tensile strength | | MPa | 12.6 | 13.33 | 15.5 | 16.5 | 12.2 | 13.4 | 11.5 | 20.0 | 15.9 | 17.5 | 18.0 | 11.3 | 13.5 | 8.8 | 13.9 |
| Breaking elongation | | % | 220 | 225 | 210 | 225 | 220 | 160 | 210 | 215 | 260 | 280 | 270 | 160 | 240 | 190 | 130 |
| 100% Modulus | | MPa | 2.8 | 3.1 | 4.3 | 5.7 | 2.1 | 5.1 | 1.5 | 7.9 | 2.0 | 2.5 | 2.8 | 2.5 | 1.7 | 2.7 | 6.9 |
| Compressive permanent strain | | % | 15 | 19 | 23 | 26 | 18 | 29 | 11 | 36 | 21 | 23 | 27 | 95 | 20 | 30 | 33 |

The details of the compounding agents used in Examples and Comparative Examples are as follows.
[1] FFKM1: a nitrile group-containing perfluoroelastomer ["PFE-131 TZ"; manufactured by Dyneon] that is a tetrafluoroethylene/perfluoro(alkyl vinyl ether)/nitrile group-containing perfluoro(alkyl vinyl ether) copolymer.
[2] FFKM2: a mixture of a perfluoroelastomer with a fluororesin ["PFE-133TBZ"; manufactured by Dyneon]. The perfluoroelastomer is a nitrile group-containing perfluoroelastomer that is a tetrafluoroethylene/perfluoro(alkyl vinyl ether)/nitrile group-containing perfluoro(alkyl vinyl ether) copolymer. In Table 1, the content (part by weight) of a perfluoroelastomer contained in FFKM2 is shown in the column "FFKM2", and the content (part by weight) of a fluororesin contained in FFKM2 is shown in the column "Fluororesin 1".
[3] FFKM3: "PFR94"; manufactured by Solvay Specialty Polymers.
[4] Fluororesin 2: a polytetrafluoroethylene micropowder ["TF9207Z"; manufactured by Dyneon].
[5] BOAP: 2,2-bis(3-amino-4-hydroxyphenyl)hexafluoropropane [2,2-Bis(3-amino-4-hydroxyphenyl)hexafluoropropane (CAS No.: 83558-87-6); manufactured by Tokyo Chemical Industry Co., Ltd.].
[6] Triazine crosslinking-system catalyst: "PFE300C"; manufactured by Dyneon.
[7] TAIC: Triallyl isocyanurate ["TAlC"; manufactured by Nihon Kasei Co., Ltd.].
[8] Perhexa 25B: 2,5-dimethyl-2,5-di(t-butylperoxy)hexane ["Perhexa 25B"; manufactured by NOF Corporation].

### (Evaluation of sealing materials)

The crosslinked molded products (sealing materials) produced above were measured and evaluated with respect to the following items. The results are shown in Table 1.

### [a] Physical properties of sealing materials under ordinary conditions

A sheet having a thickness of 2 mm was produced in accordance with JIS K6250, and a dumbbell-shaped No. 3 type test piece was punched out from the sheet in accordance with JIS K6251. The test piece was drawn at 500 mm/min, and was then measured with respect to tensile strength, breaking elongation and a 100% modulus. The hardness of the sheet was also measured in accordance with JIS K6253 with a type-A durometer hardness tester. All of these tests were carried out at 25°C.

### [b] Compressive permanent strains of sealing materials

An O-ring having a wire diameter ϕ of 3.53 was used for the measurement of the compressive permanent strain of each of the sealing materials in accordance with JIS K6262 under the conditions of 260°C, for 72 hours and at a compression ratio of 25%.

## Claims

1. A perfluoroelastomer composition comprising:
100 parts by weight of a perfluoroelastomer containing a constituent unit derived from tetrafluoroethylene, a constituent unit derived from a perfluoro(alkyl vinyl ether) or a perfluoro(alkoxyalkyl vinyl ether) and a constituent unit derived from a nitrile group-containing perfluorovinyl ether;
greater than or equal to 1 part by weight and less than 25 parts by weight of a fluororesin; and
at least one crosslinking agent selected from the group consisting of a bis(aminophenol) compound represented by general formula (1) below: 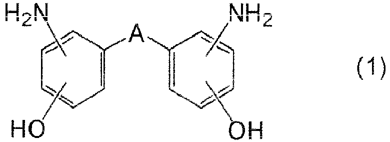 and a bis(aminothiophenol) compound represented by general formula (2) below: 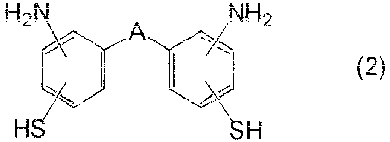 and a tetraamine compound represented by general formula (3) below: 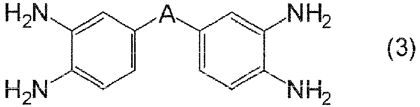 [in formulae (1) to (3), A represents SO₂, O, C=O, an alkylene group having 1 to 6 carbon atoms, a perfluoroalkylene group having 1 to 10 carbon atoms, or a carbon-carbon bond directly bonding the two benzene rings to each other; and in formulae (1) and (2), a NH₂ group and an OH group or an SH group both located on the same benzene ring are adjacent to each other and the NH₂ group and the OH group or the SH group are in the meta- or para-position with respect to the group A].

2. The perfluoroelastomer composition according to claim 1, wherein a content of said crosslinking agent is 0.05 to 5 parts by weight relative to 100 parts by weight of said perfluoroelastomer.

3. The perfluoroelastomer composition according to claim 1, wherein a content of said fluororesin is 3 to 20 parts by weight relative to 100 parts by weight of said perfluoroelastomer.

4. The perfluoroelastomer composition according to claim 1, wherein the perfluoroelastomer composition contains no inorganic filler.

5. A sealing material comprising a crosslinked product of the perfluoroelastomer composition according to claim 1.

6. The sealing material according to claim 5, wherein the sealing material is used for a semiconductor manufacturing device.

7. A method for producing a sealing material, the method comprising a step of crosslinking and molding the perfluoroelastomer composition according to claim 1.

8. The production method according to claim 7, wherein said step of crosslinking and molding includes a step of crosslinking with an ionizing radiation.
